Europäisches Patentamt

**European Patent Office**

Office européen des brevets

(11) Veröffentlichungsnummer: **0 040 766**
**B1**

(12) **EUROPÄISCHE PATENTSCHRIFT**

(45) Veröffentlichungstag der Patentschrift:
**20.03.85**

(21) Anmeldenummer: **81103721.7**

(22) Anmeldetag: **14.05.81**

(51) Int. Cl.⁴: **H 02 H 7/16,** H 02 H 3/36,
H 02 H 3/44

(54) **Überwachungseinrichtung für die Kondensatorbatterien eines Drehstrom-Filterkreises.**

(30) Priorität: **27.05.80 DE 3020110**

(43) Veröffentlichungstag der Anmeldung:
**02.12.81 Patentblatt 81/48**

(45) Bekanntmachung des Hinweises auf die Patenterteilung:
**20.03.85 Patentblatt 85/12**

(84) Benannte Vertragsstaaten:
**DE GB SE**

(56) Entgegenhaltungen:
**DE - A - 2 264 064**
**FR - A - 1 402 917**
**FR - A - 1 403 148**
**GB - A - 1 189 246**
**US - A - 4 219 856**

(73) Patentinhaber: **Siemens Aktiengesellschaft, Berlin und München Wittelsbacherplatz 2, D-8000 München 2 (DE)**

(72) Erfinder: **Becker, Michael, Dipl.-Ing., Ringstrasse 50, D-8521 Uttenreuth (DE)**
Erfinder: **Fendt, Alfons, Dipl.-Ing., Gleiwitzer Strasse 64, D-8520 Erlangen (DE)**
Erfinder: **Povh, Dusan, Dr., Waltherstrasse 3, D-8500 Nürnberg (DE)**
Erfinder: **Renz, Klaus, Dipl.-Ing,, Heinrich-Heine-Strasse 15, D-8510 Fürth (DE)**
Erfinder: **Schuch, Gerhard, Heuweg 8, D-8520 Erlangen (DE)**
Erfinder: **Waldmann, Hermann, Dr., Wiesenstrasse 14, D-8521 Weiher (DE)**

## Beschreibung

Die Erfindung betrifft eine Überwachungseinrichtung für die Kondensatorbatterien eines Drehstrom-Filterkreises mit in Stern geschalteten und sternpunktseitig geerdeten Filtersträngen, deren Kondensatorbatterien jeweils aus einer Anzahl von parallelen Strängen mit einer Anzahl von in Reihe geschalteten, mit durchgehenden Querleitungen miteinander verbundenen Teilkondensatoren bestehen, wobei Betragsänderungen der Grundschwingung des vom Sternpunkt des Drehstrom-Filterkreises nach Erde abfliessenden Nullstromes ermittelt und zur Bestimmung von defekten Teilkondensatoren in einer Kondensatorbatterie ausgewertet werden. Eine derartige Überwachungseinrichtung ist nach der FR-A-1 402 917 bekannt.

Bei einer Kondensatorbatterie mit einer grossen Anzahl von parallelen Strängen bzw. einer grossen Anzahl von in Reihe geschalteten Teilkondensatoren ändert sich bei Ausfall eines Teilkondensators der Strom der Kondensatorbatterie nur in sehr geringem Masse, wobei noch erschwerend hinzukommt, dass bei einer solchen Kondensatorbatterie die durch Temperatureinflüsse verursachten Stromänderungen grösser sein können, als die Stromänderungen, welche durch den Ausfall eines oder mehrerer Teilkondensatoren verursacht werden. Bei Kondensatorbatterien mit einer grossen Anzahl von Teilkondensatoren lassen sich daher mit der bekannten Überwachungseinrichtung defekt gewordene Teilkondensatoren nicht zuverlässig genug feststellen.

Der Erfindung liegt die Aufgabe zugrunde, eine Überwachungseinrichtung für eine Kondensatorbatterie der eingangs genannten Art zu schaffen, die messtechnisch einfach ausführbar ist und den Ausfall eines oder mehrerer Teilkondensatoren zuverlässig anzeigt.

Diese Aufgabe wird bei einer Überwachungseinrichtung der eingangs genannten Art erfindungsgemäss dadurch gelöst, dass zusätzlich noch Änderungen der Phasenlage der Grundschwingung des Nullstroms ermittelt werden und die ermittelten Änderungen von Betrag und Phasenlage der Grundschwingung des Nullstroms nur dann ausgewertet werden, wenn diese plötzlich erfolgen (transiente Auswertung).

Nach der FR-A-1 403 148 ist es bei einer Überwachungseinrichtung für die Kondensatorbatterien eines im Stern geschalteten Drehstrom-Filterkreises bekannt, Änderungen der Phasenlage des vom Sternpunkt nach Erde abfliessenden Nullstroms zur Ermittlung eines defekten Teilkondensators auszuwerten. Die Bestimmung von defekten Teilkondensatoren ist jedoch auch hier mit den gleichen Problemen behaftet wie bei der Überwachungseinrichtung gemäss der eingangs erwähnten Veröffentlichung.

Der entscheidende Vorteil gegenüber der bekannten Überwachungseinrichtung ergibt sich bei der erfindungsgemässen Überwachungseinrichtung durch die transiente Auswertung der Nullstromänderungen, wobei unter einer transienten Auswertung verstanden wird, dass nur schnelle Änderungen ausgewertet werden, während allmählich auftretende Änderungen unbeachtet bleiben.

Es wird noch darauf verwiesen, dass nach der EP-A-0 040 768 beansprucht ist, bei Drehstrom-LC-Filterkreisen den Unterschied zwischen gemessenem und nachgebildetem Filterstrom transient auszuwerten und nach der EP-A-0 040 765 beansprucht ist, bei Kondensatorbatterien den Unterschied zwischen der gemessenen und der nachgebildeten Spannung der Kondensatorbatterie transient auszuwerten.

Eine schaltungsmässige Realisierung der erfindungsgemässen Überwachungseinrichtung enthält folgende Merkmale:

a) Es ist ein Strommesswandler zur Messung des vom Sternpunkt des Drehstrom-Filterkreises nach Erde abfliessenden Nullstroms vorgesehen,

b) es sind Spannungsmesswandler zur Messung der netzseitigen Phasenspannungen des Filterkreises vorgesehen,

c) es ist ein Siebglied zur Gewinnung der Grundschwingung des kompensierten Nullstroms vorgesehen,

d) es sind phasenbezogene Nullstromauswertungen vorgesehen, die jeweils von der Grundschwingung des kompensierten Nullstroms vom Siebglied und von einer netzseitigen Phasenspannung von einem der Spannungsmesswandler beaufschlagt sind, wobei die phasenbezogenen Nullstromauswertungen den auf die zugehörige Phasenspannung bezogenen Imaginärteil der Grundschwingung des kompensierten Nullstroms als Fehlersignal bilden und über einen Differenzierer transient auswerten,

e) es sind Kompensationsglieder vorgesehen, die jeweils eingangsseitig mit den Ausgangssignalen aller phasenbezogenen Nullstromauswertungen beaufschlagt sind und die Ausgangssignale der Nullstromauswertungen der nicht von einem defekten Teilkondensator betroffenen Phasen eliminieren,

f) es ist ein Melde- und Auslösekreis mit Phasenzeigern vorgesehen, die an die Kompensationsglieder angeschlossen sind und Zählstufen zur Ermittlung der Anzahl der in einer Phase ausgefallenen Teilkondensatoren einer Kondensatorbatterie enthalten.

Bei einem unsymmetrisch gespeisten oder belasteten Netz ist eine Kompensationsschaltung zur Bildung eines kompensierten Nullstroms vorgesehen, die elektronische Filternachbildungen enthält, die eingangsseitig an die Spannungsmesswandler angeschlossen sind und nachgebildete Phasenstromwerte erzeugen, und die ferner einen Addierverstärker zur Erzeugung eines nachgebildeten Nullstroms aus den Ausgangssignalen der elektronischen Filternachbildungen sowie einen Differenzverstärker zur Bildung der Abweichungen zwischen dem vom Addierverstärker nachgebildeten Nullstrom und dem vom Strommesswandler gemessenen Nullstrom enthält.

Weitere vorteilhafte Weiterbildungen der Erfindung sind in den abhängigen Ansprüchen gekennzeichnet.

Die Erfindung geht davon aus, dass bei einem Drehstrom-Filterkreis mit identisch aufgebauten, in Stern geschalteten LC-Reihenschwingkreisen im ungestörten Zustand kein Nullstrom vom Sternpunkt nach Erde auftritt. Durch einen Kondensatorfehler in einer der Kondensatorbatterien des Drehstrom-Filterkreises lässt sich messtechnisch eine Änderung des Nullstroms nach Betrag und Phasenlage erfassen. Durch eine Zuordnung des Nullstroms zu den drei Phasenspannungen kann unterschieden werden, in welcher der drei Phasen ein Defekt eines oder mehrerer Teilkondensatoren in der Kondensatorbatterie aufgetreten ist. Bei einer transienten Auswertung werden langsame Änderungen des Nullstroms unterdrückt, die vorzugsweise durch Temperaturunterschiede bedingt sind, während rasche Nullstromänderungen, die durch den Defekt eines Teilkondensators hervorgerufen werden, ausgewertet und angezeigt werden.

Ausführungsbeispiele der Erfindung sind in den Zeichnungen dargestellt und werden im folgenden näher beschrieben. Es zeigen:

Fig. 1 eine schematische Darstellung einer erfindungsgemässen Überwachungseinrichtung,

Fig. 2 das Ersatzschaltbild eines LC-Reihenschwingkreises,

Fig. 3 den Schaltungsaufbau für eine elektronische Filternachbildung,

Fig. 4 ein Blockschaltbild für eine phasenbezogene Nullstromauswertung,

Fig. 5 Blockschaltbilder zur Entwicklung eines Vektoridentifizierers,

Fig. 6 ein Blockschaltbild für die Phasenanzeige im Melde- und Auslösekreis und

Fig. 7 ein Blockschaltbild für eine stationäre Nullstromüberwachung.

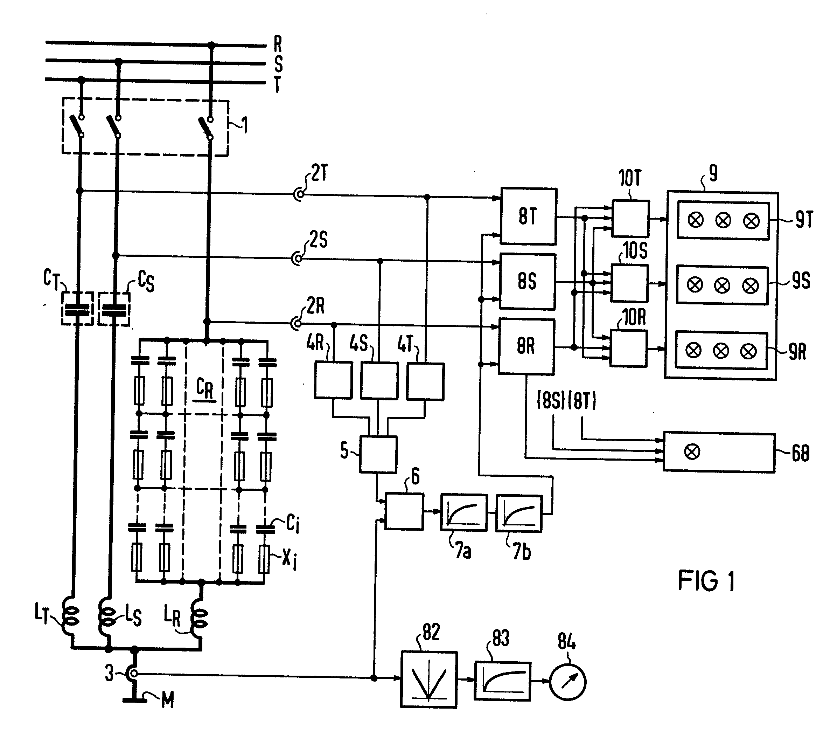

Fig. 1 zeigt eine schematische Darstellung einer erfindungsgemässen Überwachungseinrichtung für die Kondensatorbatterien $C_R$, $C_S$, $C_T$ eines Drehstromfilterkreises, dessen Filterstränge über eine Schalteinrichtung 1 an eine Drehstrom-Sammelschiene mit den Phasen RST angeschlossen ist.

Der dreiphasige Filterkreis besteht aus drei LC-Reihenschwingkreisen, die in Stern geschaltet und sternpunktseitig geerdet sind. Die LC-Reihenschwingkreise sind auf die Frequenz einer charakteristischen Oberschwingung abgestimmt.

Die Kondensatorbatterien $C_R$, $C_S$, $C_T$ des Drehstrom-Filterkreises bestehen jeweils aus einer Anzahl von parallelen Strängen mit jeweils einer Anzahl von in Reihe geschalteten Teilkondensatoren $C_i$ mit Sicherung $X_i$, wobei benachbarte Teilkondensatoren mit durchgehenden Querleitungen verbunden sind. Zur Verdeutlichung ist in der Zeichnung lediglich die Kondensatorbatterie $C_R$ ausführlicher dargestellt, während die gleichartig aufgebauten Kondensatorbatterien $C_S$ und $C_T$ zeichnerisch nur mit dem Symbol eines Kondensators dargestellt sind. Eine derartige Kondensatorbatterie kann mehr als 100 Einzelkondensatoren enthalten. Beim Ausfall eines Einzelkondensators ändert sich die wirksame Kapazität einer Phase und damit auch die Grundschwingung des Phasenstroms nur sehr wenig. Derartig geringe Stromänderungen sind bei den hohen Stromstärken der Phasenströme messtechnisch nur schwer erfassbar. Die erfindungsgemässe Überwachungseinrichtung wertet daher den vom Sternpunkt nach Erde abfliessenden Nullstrom aus, der im ungestörten Zustand gleich Null ist.

Die Phasenspannung des LC-Reihenschwingkreises mit der Kondensatorbatterie $C_R$ und der Drosselspule $L_R$ wird von einem potentialtrennenden Spannungsmesswandler 2R erfasst. In gleicher Weise wird die Phasenspannung des LC-Reihenschwingkreises mit der Kondensatorbatterie $C_S$ und der Drosselspule $L_S$ von einem potentialtrennenden Spannungsmesswandler 2S, sowie die Phasenspannung des LC-Reihenschwingkreises mit der Kondensatorbatterie $C_T$ und der Drosselspule $L_T$ von einem potentialtrennenden Spannungsmesswandler 2T gemessen. An den Bürden der Spannungsmesswandler 2R, 2S, 2T fallen Messspannungen auf dem Spannungsniveau der Signalverarbeitung ab, die den jeweiligen Phasenspannungen proportional sind. Den potentialtrennenden Spannungsmesswandlern 2R, 2S, 2T können Entkopplungsverstärker nachgeschaltet sein, um die Wandlerkreise von der nachfolgenden signalverarbeitenden Elektronik zu trennen. Durch eine derartige Trennung des Hochspannungspotentials vom Elektronikpotential können Störungen in der Anlage nicht in die Elektronik übergekoppelt werden.

Der vom Sternpunkt gegen Erde M abfliessende Nullstrom des Filterkreises wird von einem potentialtrennenden Strommesswandler 3 erfasst. An der Bürde des Strommesswandlers 3 fällt eine Messspannung auf dem Niveau der Signalverarbeitung ab, die dem Nullstrom des Filterkreises proportional ist. Dem Strommesswandler 2 kann ebenfalls ein Entkopplungsverstärker nachgeschaltet sein.

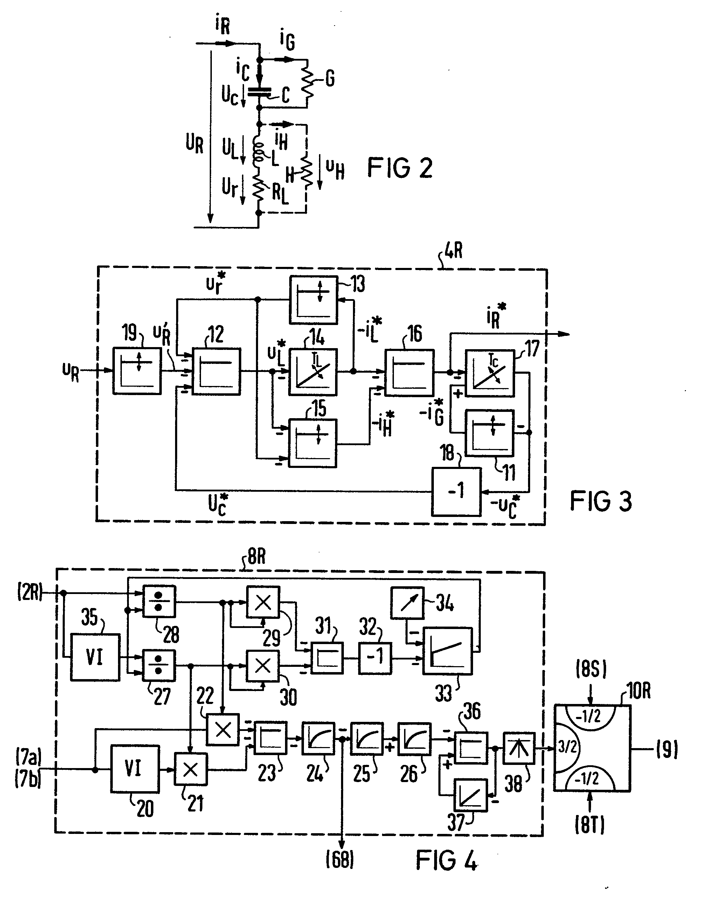

Bei symmetrischer Einspeisung durch die Phasen RST und identischem Aufbau der LC-Reihenschwingkreise ist die Summe der Phasenströme und damit der gegen Erde M abfliessende Nullstrom gleich Null. Wird ein Nullstrom gemessen, so kann dieser seine Ursache sowohl in einer unsymmetrischen Einspeisung oder in einer Unsymmetrie der einzelnen LC-Reihenschwingkreise haben, die durch einen Defekt eines der Teilkondensatoren in einer der Kondensatorbatterien hervorgerufen ist. Um den Einfluss von Unsymmetrien der speisenden Phasenspannungen auszuschalten, ist eine Kompensationsschaltung vorgesehen, die elektronische Filternachbildungen 4R, 4S, 4T, einen Addierverstärker 5 und einen Differenzverstärker 6 umfasst. Die elektronischen Filternachbildungen 4R, 4S, 4T, deren Aufbau am Beispiel der Filternachbildung 4R in den Figuren 2 und 3 dargestellt ist, erzeugen aus den von den Spannungsmesswandlern 2R, 2S, 2T erfassten Phasenspannungen nachgebildete Phasenstromwerte. Die nachgebildeten Phasenstromwerte der drei Phasen werden im Addierverstärker 5 zu einem nachgebildeten Nullstrom addiert. Im Differenzverstärker 6 werden die Abweichungen zwischen dem vom Addierverstärker 5 nachgebildeten Nullstrom und dem vom Strommesswandler 3 gemessenen Nullstrom gebildet. Das Ausgangssignal des Differenzverstärkers 6 stellt den kompensierten Nullstrom dar.

Vom kompensierten Nullstrom wird nur die Grundschwingung weiter ausgewertet. Zur Gewinnung der Grundschwingung wird der kompensierte Nullstrom über ein Siebglied geführt, das als zweistufiges Tiefpassfilter mit den Tiefpässen 7a und 7b ausgeführt ist. Die Parameter der beiden Tiefpässe 7a und 7b können so eingestellt werden, dass die Oberschwingungen auf ca. 1% unterdrückt werden, während die Grundschwingung nur um etwa 50% gedämpft wird. Das Siebglied 7a, 7b ist so ausgelegt, dass für die Grundschwingung zwischen Eingang und Ausgang eine Phasenverschiebung von 90° bei der Netzfrequenz auftritt. Am Ausgang des Siebgliedes 7a, 7b erscheint die Grundschwingung des kompensierten Nullstroms.

Die vom Siebglied 7a, 7b gelieferte Grundschwingung des kompensierten Nullstroms wird auf phasenbezogene Nullstromauswertungen 8R, 8S, 8T gegeben. Da sich beim Defekt eines Teilkondensators in einer der Kondensatorbatterien der Nullstrom nach Betrag und Phasenlage ändert, wird in den phasenbezogenen Nullstromauswertungen 8R, 8S, 8T die Grundschwingung des kompensierten Nullstroms in Realteil und im Imaginärteil zerlegt, wobei als Referenzgrösse die jeweilige Phasenspannung von den Spannungsmesswandlern 2R, 2S, 2T genommen wird. Die Phasenspannungen eignen sich als Referenzgrössen, da sie wesentlich weniger Oberschwingungen enthalten als die Phasenströme und eine Zerlegung in Realteil und Imaginärteil nur bei einer Frequenz definiert ist. Ein Schaltungsbeispiel der phasenbezogenen Nullstromauswertung 8R ist in Fig. 4 dargestellt.

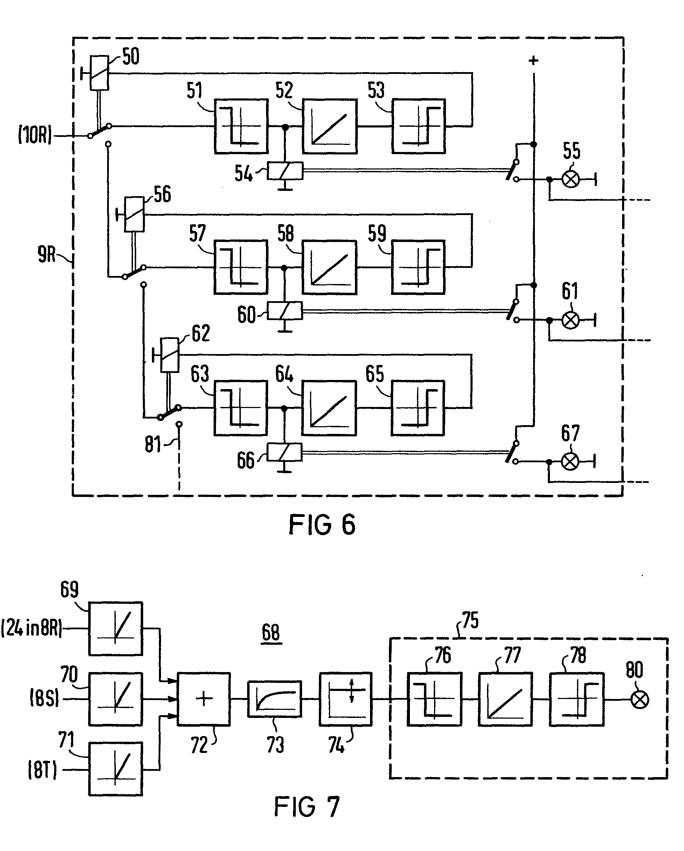

Die Ausgangssignale der phasenbezogenen Nullstromauswertungen 8R, 8S, 8T werden über Kompensationsglieder 10R, 10S, 10T auf einen Melde- und Auslösekreis 9 gegeben. Der Melde- und Auslösekreis 9 zeigt in Phasenanzeigen 9R, 9S, 9T an, wieviele Teilkondensatoren in welcher Kondensatorbatterie defekt sind. Ein Schaltungsbeispiel eines geeigneten Kompensationsgliedes 10R ist in Fig. 4 und ein Schaltungsbeispiel einer geeigneten Phasenanzeige 9R des Melde- und Auslösekreises 9 ist in Fig. 6 dargestellt.

Bei einem symmetrischen Drehstromnetz RST ist die Kompensationsschaltung mit den Filternachbildungen 4R, 4S, 4T, dem Addierverstärker 5 und dem Differenzverstärker 6 nicht erforderlich.

Fig. 2 zeigt ein Ersatzschaltbild eines LC-Reihenschwingkreises mit der Kapazität C der Kondensatorbatterie, dem Gleichstromleitwert G der Kondensatorbatterie, der Induktivität L der Drosselspule, dem Gleichstromwiderstand $R_L$ der Drosselspule und dem Hochpasswiderstand H der Drosselspule. Die Ströme und Spannungen sind mit entsprechenden Indizes bezeichnet.

Fig. 3 zeigt den Schaltungsaufbau der elektronischen Filternachbildung 4R, der im folgenden unter Bezugnahme auf das Ersatzschaltbild der Fig. 2 beschrieben wird. Die elektronische Filternachbildung 4R enthält zur Anpassung einen Verstärker 19 mit einstellbarer Verstärkung, der eingangsseitig mit der gemessenen Phasenspannung $u_R$ beaufschlagt ist. Die angepasste Phasenspannung $-u_R'$ wird zusammen mit einem nachgebildeten Kondensatorspannungsabfall $u_c{}^*$ und einem nachgebildeten Spannungsabfall $u_r{}^*$ am Gleichstromwiderstand $R_L$ der Drosselspule einem Addierverstärker 12 zugeführt. Der Addierverstärker 12 ermittelt aus diesen Eingangsgrössen einen nachgebildeten Drosselspannungsabfall $u_L{}^*$ nach Gl. (1):

$$u_L{}^* = -(-u_R' + u_R{}^* + u_c{}^*) \qquad (1)$$

Der nachgebildete Drosselspannungsabfall $u_L{}^*$ wird einem Integrator 14 mit einstellbarer Integrationszeitkonstante $T_L$ zugeführt, der einen nachgebildeten Drosselstrom $-i_L{}^*$ nach Gl(2) ermittelt:

$$-i_L{}^*(t) = \frac{-1}{T_L} \int_0^t u_L{}^*(\tau)\, d\tau \qquad (2)$$

Der nachgebildete Drosselstrom $-i_L{}^*$ wird in einem Verstärker 13 mit einstellbarer Verstärkung in einen nachgebildeten Spannungsabfall $u_r{}^*$ am Gleichstromwiderstand $R_L$ der Drosselspule umgesetzt nach Gl. (3):

$$u_r{}^* = -(-i_L{}^* \cdot R_L) \qquad (3)$$

Zur Nachbildung des Hochpasswiderstandes H ist ein weiterer Verstärker 15 mit einstellbarer Verstärkung vorgesehen, dem eingangsseitig der nachgebildete Drosselspannungsabfall $u_r{}^*$ am Gleichstromwiderstand $R_L$ der Drosselspule zugeführt wird. Die Ausgangsspannung des Verstärkers 15 stellt den nachgebildeten Strom $-i_H{}^*$ durch den Hochpasswiderstand H nach Gl. (4) dar. Ist der Filterkreis kein Hochpass, so wird die Verstärkung des Verstärkers 15 so eingestellt, dass seine Ausgangsspannung stets Null ist.

$$-i_H{}^* = -(u_r{}^* + u_L{}^*) \cdot \frac{1}{H} \qquad (4)$$

Zur Ermittlung des nachgebildeten Phasenstroms $i_R{}^*$ nach Gl.(5) ist ein Addierverstärker 16 vorgesehen, dem eingangsseitig der nachgebildete Drosselstrom $-i_L{}^*$ und der nachgebildete Strom $-i_H{}^*$ durch den Hochpasswiderstand H zugeführt werden.

$$i_R{}^* = -(-i_H{}^* - i_L{}^*) \qquad (5)$$

Zur Ermittlung des nachgebildeten Kondensatorspannungsabfalls wird die Differenz zwischen dem nachgebildeten Phasenstrom $i_R{}^*$ und einem nachgebildeten Strom $-i_G{}^*$ durch den Gleichstromleitwert G der Kondensatorbatterie im Eingang eines Integrators 17 gebildet und integriert. Der Integrator 17 mit einstellbarer Integrationszeitkonstante $T_c$ realisiert die Gl.(6):

$$-u_c{}^*(t) = -\frac{1}{T_c}\int_0^t \left( (i_R{}^*(\tau) - i_G{}^*(\tau) \right) d\tau \qquad (6)$$

Der nachgebildete Spannungsabfall $u_c{}^*$ an der Kondensatorbatterie der Phase R wird über einen Umkehrverstärker 18 auf einen Eingang des Addierverstärkers 12 zurückgeführt und über einen Verstärker 11 mit einstellbarer Verstärkung, der zur Nachbildung des Gleichstromleitwerts G der Kondensatorbatterie vorgesehen ist, auf den Integrator 17 zurückgeführt. Die Operationsverstärker des Filtermodells können mit einer sogenannten Feedforward-Bedämpfung beschaltet sein, um den ausnützbaren Frequenzbereich zu erweitern.

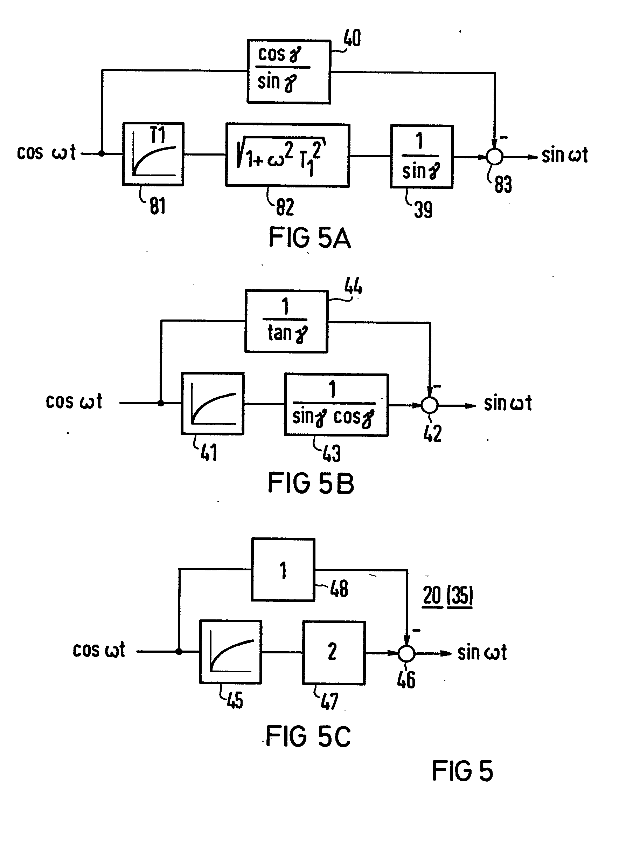

Fig. 4 zeigt ein Blockschaltbild der phasenbezogenen Nullstromauswertung 8R für die Phase R. Die Grundschwingung des kompensierten Nullstroms vom Siebglied 7a, 7b wird einem Vektoridentifizierer 20 zugeführt. Der Vektoridentifizierer 20, dessen Aufbau in Fig. 5 im einzelnen erläutert wird, bildet aus einer Schwingung eine um 90°el phasenverschobene Schwingung. Fasst man die ihm eingangsseitig zugeführte Schwingung als Winkelkomponente einer Schwingung auf, beispielsweise als Kosinuskomponente, so liefert der Vektoridentifizierer ausgangsseitig die zugehörige Sinuskomponente.

Zur phasenbezogenen Auswertung wird die Grundschwingung des kompensierten Nullstroms in Real- und Imaginärteil zerlegt, wobei die Phasenspannung der zugehörigen Phase R als Referenzgrösse verwendet wird. Wie später noch näher erläutert wird, genügt die Ermittlung des Imaginärteils des kompensierten Nullstroms. Hierzu werden die Winkelkomponenten des kompensierten Nullstroms einem ersten Multiplizierer 21 und einem zweiten Multiplizierer 22 zugeführt, deren weitere Eingänge mit den Ausgängen von Dividierern 27 und 28 beschaltet sind, die mit normierten Winkelkomponenten der Phasenspannung der Phase R belegt sind.

Die vom Spannungsmesswandler 2R erfasste Phasenspannung der Phase R wird einem weiteren Vektoridentifizierer 35 zugeführt, der in gleicher Weise aufgebaut ist wie der Vektoridentifizierer 20. Die vom Spannungsmesswandler 2R abgegebene Messspannung wird als Kosinuskomponente betrachtet und dem Divisoreingang des Dividierers 28 zugeführt. Die vom Vektoridentifizierer 35 gelieferte zugehörige Sinuskomponente wird dem Divisoreingang des Dividierers 27 zugeführt.

Die Amplituden der Phasenspannungen können schwanken. Dies ist unerwünscht, da die Phasenspannungen als Referenzgrössen verwendet werden. Die Winkelkomponenten der Phasenspannungen werden daher über einen nichtlinearen Regelkreis normiert. Die normierten Winkelkomponenten sind phasengleich mit den Winkelkomponenten der Phasenspannung, aber unabhängig von deren Amplitudenschwankungen. Die normierten Winkelkomponenten der Phasenspannungen werden als Referenzgrössen bei der Zerlegung des kompensierten Nullstroms in Real- und Imaginärteil verwendet.

Der zur Normierung der Winkelkomponenten der Phasenspannung der Phase R vorgesehene nichtlineare Regelkreis enthält die Dividierer 27 und 28, denen jeweils ein als Quadrierer beschalteter Multiplizierer 29 und 30 nachgeschaltet ist. Die Ausgangssignale der Multiplizierer 29 und 30 werden in einem Verstärker 31 summiert und in einem Umkehrverstärker 32 invertiert. Einem als PI-Regler beschalteten Regelverstärker 33 wird als Vorgabe der gewünschten Amplitude der normierten Winkelkomponenten eine konstante Spannung von einer Einstellvorrichtung 34 auf den Führungsgrösseneingang und das Ausgangssignal des Umkehrverstärkers 32 auf den Regelgrösseneingang aufgeschaltet. Das Ausgangssignal des Regelverstärkers 33 wird auf die Dividiereneingänge der Dividierer 27 und 28 zurückgeführt. Besteht eine Differenz zwischen der vom Addierverstärker 31 ermittelten Summe der Quadrate der Winkelkomponenten der gemessenen Phasenspannung der Phase R und der vorgegebenen Amplitude für die normierten Winkelkomponenten, so regelt der PI-Regler 33 diese Differenz aus.

Bei einem Defekt eines der Teilkondensatoren $C_i$ in der Kondensatorbatterie $C_R$ in der Phase R tritt ein Nullstrom auf, dessen Grundschwingung um nahezu 90°el phasenverschoben ist zur Phasenspannung der Phase R. Es genügt daher die Ermittlung des Imaginärteiles des Nullstromes. Hierzu werden in den Multiplizierern 21 und 22 die Winkelkomponenten des kompensierten Nullstromes jeweils mit den gleichnamigen normierten Winkelkomponenten der Phasenspannung der Phase R multipliziert. Die Ausgangsspannungen der Multiplizierer 21 und 22 werden in einem Addierverstärker 23 summiert. Das Ausgangssignal des Addierverstärkers 23 stellt den Imaginärteil des kompensierten Nullstromes dar, bezogen auf die Phasenspannung der Phase R. Bei einem Defekt eines Teilkondensators in der Kondensatorbatterie $C_R$ in der gleichen Phase R entspricht der Imaginärteil der Amplitude des Nullstromes. Bei einem Defekt eines Teilkondensators in einer der Kondensatorbatterien $C_S$ bzw. $C_T$ der beiden anderen Phasen entspricht der Imaginärteil der halben Amplitude des Nullstromes.

Die Schaltung mit den Dividierern 27 und 28, den Multiplizierern 29 und 30 und den Verstärkern 31, 32, 33 stellt einen Vektoranalysator dar. Die Schaltung mit den Multiplizierern 21 und 22 und dem Addierverstärker 23 ist ein Vektordreher für eine Winkelkomponente.

Der vom Addierverstärker 23 gebildete Imaginärteil des Nullstromes wird über ein dreistufiges Tiefpassfilter mit den Tiefpässen 24, 25, 26 geführt, das zur Unterdrückung von Oberschwingungen dient, die durch die Multiplizierer und Dividierer entstehen können. Das Ausgangssignal des dreistufigen Tiefpassfilters wird in einem Differenzierer differenziert, der einen Differenzverstärker 36 enthält, dessen Ausgangssignal über einen Integrator 37 auf einen Eingang des Differenzverstärkers 36 zurückgeführt wird. Der Differenzierer 36, 37 ermöglicht eine transiente Auswertung des Imaginärteils des Nullstromes. Langsame Änderungen des Nullstroms, die ihre Ursache hauptsächlich in Temperaturänderungen im Filterkreis haben, werden nicht ausgewertet. Plötzliche Änderungen des Nullstroms, die Ursache in einem Defekt eines Teilkondensators in der Kondensatorbatterie haben, werden als Impulse über die Kompensationsglieder 10R, 10S, 10T auf den Melde- und Auslösekreis 9 weitergegeben und anschliessend vom Differenzierer 36, 37 auf Null ausgeregelt. Die Überwachungseinrichtung ist daher nach der Auswertung eines Defekts eines ersten Teilkondensators nach einer gewissen Zeit, die durch die Zeitkonstante des Differenzierers 36, 37 bestimmt wird, erneut bereit, den Defekt eines wieteren Teilkondensators anzuzeigen.

Das Ausgangssignal des Differenzierers 36, 37 wird durch einen Betragsbildner 38 zu negativen Werten gleichgerichtet, da am Ausgang des Differenzierers Impulse mit positiver und negativer Polarität auftreten können.

Bei einem Defekt eines Teilkondensators in einer der Kondensatorbatterien $C_S$ bzw. $C_T$ der Phasen S bzw. T erscheint auch in der auf die Phase R bezogenen Nullstromauswertung 8R ein Nullstrom, dessen Imaginärteil den halben Wert wie bei der eigentlich betroffenen Phase aufweist. Um die tatsächlich von einem Defekt eines Teilkondensators betroffenen Phase eindeutig ermitteln zu können, ist eine Kompensation der phasenbezogenen Nullstromauswertung der nicht betroffenen Phasen erforderlich. Hierzu enthält das Kompensationsglied 10R einen Addierverstärker mit einer speziellen Eingangsbeschaltung. Der Addierverstärker wichtet das Signal von der zugehörigen Nullstromauswertung 8R der Phase R mit dem Faktor 3/2 und die Signale der Nullstromauswertungen 8S und 8T der beiden anderen Phasen mit dem Faktor-1/2. Die gewichteten Signale der Nullstromauswertungen 8S und 8T der beiden anderen Phasen S und T werden von der gewichteten Nullstromauswertung der zugehörigen Phase R abgezogen. Das Ausgangssignal des Kompensationsgliedes 10R wird zusammen mit den Ausgangssignalen der beiden anderen Kompensationsglieder 10S und 10T dem Melde- und Auslösekreis 9 zugeführt, der in Fig. 6 näher erläutert wird.

Fig. 5 zeigt die Entwicklung eines Vektoridentifizierers für den allgemeinen Fall zu der im vorliegenden Fall möglichen vereinfachten Schaltung. Fig. 5a zeigt den allgemeinen Fall, dem das trigonometrische Additionstheorem (7) zugrundliegt:

$$\cos(\omega t - \gamma) = \sin\omega t \cdot \sin\gamma + \cos\omega t \cdot \cos\gamma \quad (7)$$

Gl(7) ergibt umgeformt Gl(7a):

$$\sin\omega t = \frac{1}{\sin\gamma} \cdot \cos(\omega t - \gamma) - \frac{\cos\gamma}{\sin\gamma} \cdot \cos\omega t \quad (7a)$$

Die Gl.(7a) lässt sich mit einem Glättungsglied 81, einer Subtraktionsschaltung 83 und Verstärkern 82, 39, 40 realisieren. Die Verstärker dienen zur Korrektur der vom Glättungsglied 36 hervorgerufenen Dämpfung.

Bezeichnet man die Zeitkonstante des Glättungsgliedes 81 mit $T_1$, so gilt die Beziehung (8):

$$\gamma = \arctan\omega T_1 \quad (8)$$

Ferner gilt die trigonometrische Beziehung (9):

$$\frac{1}{\sqrt{1 + (\tan\gamma)^2}} = \frac{1}{\sqrt{1 + \dfrac{\sin^2\gamma}{\cos^2\gamma}}} = \cos\gamma \quad (9)$$

Am Ausgang des Glättungsgliedes 81 erhält man unter Beachtung der Gl.(8) und (9) die Gl.(10):

$$\frac{\cos(\omega t) - \gamma}{\sqrt{1 + (\omega T_1)^2}} = \frac{\cos(\omega t - \gamma)}{\sqrt{1 + (\tan\gamma)^2}} = \cos\gamma \cdot \cos(\omega t - \gamma) \quad (10)$$

Fig. 5b zeigt die entsprechend umgeformte Schaltung.

Für $\gamma = 45°$ gilt:

$$\tan\gamma = 1$$
$$\cos\gamma = \sin\gamma = \frac{1}{\sqrt{2}}$$

Für die Glättungszeitkonstante gilt:

$$T_1 = \frac{1}{\omega} = \frac{1}{2\pi f_N}$$

wobei $f_N$ die Netzfrequenz ist.

Mit diesen Beziehungen erhält man die wesentlich vereinfachte Schaltung der Vektoridentifizierer 20 und 35, die in Fig. 5c dargestellt ist.

Fig. 6 zeigt das Blockschaltbild der Phasenanzeige 9R im Melde- und Auslösekreis 9 für die transiente Nullstromauswertung. Das Ausgangssignal des Kompensationsgliedes 10R wird über eine Umschalteinrichtung 50 auf eine erste Zählstufe gegeben, die einen eingangsseitigen Grenzwertmelder 51, einen nachgeschalteten Integrator 52, einen nachgeschalteten weiteren Grenzwertmelder 53, ein Schaltrelais 54 und eine Anzeige 55 umfasst. Die weiteren Zählstufen sind in gleicher Weise aufgebaut und enthalten die Elemente 56 bis 61 bzw. 62 bis 67. Die eingangsseitigen Grenzwertmelder 51, 57, 63 der einzelnen Zählstufen sind so eingestellt, dass plötzliche Nullströme, die durch eine Kapazitätsänderung hervorgerufen werden, eine Anzeige auslösen. Die Kapazitätsänderung, die zu einer Auslösung führen soll, kann beispielsweise dem Kurzschluss einer halben Zeile in einer Kondensatorbatterie entsprechen. Die Ansprechschwellenwerte der eingangsseitigen Grenzwertmelder 51, 57, 63 der einzelnen Zählstufen sind vorzugsweise auf gleiche Werte eingestellt.

Die Wirkungsweise der Phasenanzeige 9R für die Phase R ist wie folgt:

Wenn durch einen Defekt eines Teilkondensators $C_i$ in der Kondensatorbatterie $C_R$ ein entsprechender Impuls vom Kompensationsglied 8R über den in der dargestellten Lage befindlichen Kontakt der Schalteinrichtung 50 auf den Eingang des Grenzwertmelders 51 gelangt, so spricht der Grenzwertmelder 51 an. Durch Aufleuchten der Anzeige 55 wird ein erster defekter Teilkondensator in der Phase R angezeigt. Hat der Grenzwertmelder 51 angesprochen, so läuft der Integrator 52 hoch, bis seine Ausgangsspannung den Ansprechschwellenwert des weiteren Grenzwertmelders 53 erreicht. Das Ausgangssignal des weiteren Grenzwertmelders 53 steuert die Schalteinrichtung 50 um, so dass der Ausgang des Kompensationsgliedes 10R nunmehr über den Schaltkontakt der Schalteinrichtung 56 mit der zweiten Zählstufe verbunden ist. Die Hochintegrationszeit des Integrators 52 in der ersten Zählstufe ist in der Grössenordnung von einigen Sekunden eingestellt, während die Rückintegrationszeit erheblich weniger als 1 Sekunde beträgt. Die Hochintegrationszeit ist länger gewählt als die maximale Zeit bis eine Sicherung $X_i$ bei einem durch einen defekten Teilkondensator verursachten Zeilenkurzschluss schmilzt. Die Rückintegrationszeit bestimmt, wie lange man einen – nicht dargestellten – Rückstellknopf drücken muss, um nach Beseitigung des Kondensatorfehlers die anstehende Meldung zu quittieren.

Bei einem Defekt eines zweiten Teilkondensators wird – sofern die erste Zählstufe nicht quittiert wurde – die zweite Zählstufe 57 bis 61 angesteuert. Durch Aufleuchten der Anzeige 61 wird der zweite defekte Teilkondensator angezeigt. Hat der Grenzwertmelder 57 in der zweiten Zählstufe angesprochen, so läuft der Integrator 58 hoch, bis seine Ausgangsspannung den Ansprechschwellenwert des weiteren Grenzwertmelders 59 erreicht. Dieser steuert die Umschalteinrichtung 56 um, so dass nunmehr der Ausgang des Kompensationsgliedes 10R mit der dritten Zählstufe 63 bis 67 verbunden ist. Die Hochintegrationszeit und die Rückintegrationszeit des Integrators 58 und die Ansprechschwellenwerte der Grenzwertmelder 57 und 59 weisen vorzugsweise die gleichen Werte auf wie bei der ersten Zählstufe.

Bei einem Defekt eines dritten Teilkondensators wird – sofern die erste und die zweite Zählstufe nicht quittiert wurden – die dritte Zählstufe 63 bis 67 angesteuert. Durch Aufleuchten der Anzeige 67 wird der dritte defekte Teilkondensator angezeigt.

Die Zählstufen in den Phasenanzeigen 9R, 9S, 9T des Melde- und Auslösekreises 9 ermöglichen folgende abgestufte Überwachungsstrategie. Wird nur ein defekter Teilkondensator gemeldet, so kann der Filterkreis bis zur nächsten regulären Wartung in Betrieb bleiben. Werden dagegen zwei defekte Teilkondensatoren gemeldet, so kann der Filterkreis nur noch eine beschränkte Zeit in Betrieb bleiben, die beispielsweise so bemessen ist, dass das Wartungspersonal herbeigerufen werden kann. Werden schliesslich drei defekte Teilkondensatoren gemeldet, so ist der Filterkreis sofort abzuschalten.

Zusätzlich zur transienten Nullstromüberwachung ist eine stationäre Nullstromüberwachung 68 vorgesehen, die auf grosse Unsymmetrien in den Phasenströmen anspricht. Die Einzelheiten der stationären Nullstromüberwachung 68 werden anhand von Fig. 7 erläutert:

Die stationäre Nullstromüberwachung 68 wird eingangsseitig mit den Imaginärteilen der phasenbezogenen Nullströme der drei Phasen beaufschlagt. Der entsprechende Imaginärteil für den phasenbezogenen Nullstrom der Phase R wird hinter dem Tiefpassfilter 24 des Siebgliedes in der phasenbezogenen Nullstromauswertung 8R abgegriffen. Die Imaginärteile der phasenbezogenen Nullströme der beiden anderen Phasen werden an den entsprechenden Punkten der zugehörigen phasenbezogenen Nullstromauswertungen 8S und 8T abgegriffen. Die Imaginärteile der phasenbezogenen Nullströme der drei Phasen werden in Gleichrichterstufen 69, 70 und 71 gleichgerichtet. Die gleichgerichteten Werte werden in einem Addierer 72 addiert und in einem Glättungsglied 73 geglättet. Dem Glättungsglied 73 ist ein Anpassverstärker 74 mit einstellbarer Verstärkung nachgeschaltet, mit dessen Hilfe der geglättete Wert auf ein gewünschtes Niveau eingestellt werden kann. Die Ausgangsspannung des Anpassverstärkers 74 wird auf den stationären Melde- und Auslösekreis 75 gegeben. Der stationäre Melde- und Auslösekreis 75 enthält einen eingangsseitigen Grenzwertmelder 76, einen nachgeschalteten Integrator 77 und einen nachgeschalteten weiteren Grenzwertmelder 78. Steht die Unsymmetrie nach einer durch die Integrationszeitkonstante des Integrators 77 und den Ansprechschwellenwert des nachgeschalteten weiteren Grenzwertmelders 78 bestimmten Zeitverzögerung immer noch an, so wird die Anzeige 80 angesteuert. Eine entsprechende Meldung kann an die Schutzeinrichtungen weitergegeben werden.

Zur Anzeige der stationären Unsymmetrie wird der gemessene Nullstrom in einem Gleichrichter 82 (Fig. 1) gleichgerichtet, in einem Glättungsglied 83 geglättet und von einem Messinstrument 84 angezeigt. Das Messinstrument 84 zeigt die Amplitude des Nullstromes an.

Die in Fig. 6 dargestellte Phasenanzeige 9R kann für die Anzeige weiterer defekter Teilkondensatoren erweitert werden, wenn an die Leitung 81 weitere Zählstufen angeschlossen werden. Die Signale zur Ansteuerung der Anzeigen 55, 61, 67 können parallel an eine – nicht dargestellte – Anlagenschutzeinrichtung gegeben werden, die bei einem entsprechenden Störungsfall den Filterkreis über die Schalteinrichtung 1 vom Netz trennt.

Anstelle der Tiefpassfilter können auch Siebglieder anderer Art vorgesehen sein, beispielsweise Resonanzfilterkreise.

## Patentansprüche

1. Überwachungseinrichtung für die Kondensatorbatterien ($C_R$, $C_S$, $C_1$) eines Drehstrom-Filterkreises mit in Stern geschalteten und sternpunktseitig geerdeten Filtersträngen, deren Kondensatorbatterien jeweils aus einer Anzahl von parallelen Strängen mit einer Anzahl von in Reihe geschalteten, mit durchgehenden Querleitungen miteinander verbundenen Teilkondensatoren ($C_1$) bestehen, wobei Betragsänderungen der Grundschwingung des vom Sternpunkt des Drehstrom-Filterkreises nach Erde (M) abfliessenden Nullstroms ermittelt und zur Bestimmung von defekten Teilkondensatoren ($C_1$) in einer Kondensatorbatterie ausgewertet werden, dadurch gekennzeichnet, dass zusätzlich noch Änderungen der Phasenlage der Grundschwingung des Nullstromes ermittelt werden und die ermittelten Änderungen von Betrag und Phasenlage der Grundschwingung des Nullstroms nur dann ausgewertet werden, wenn diese plötzlich erfolgen (transiente Auswertung).

2. Überwachungseinrichtung nach Anspruch 1, gekennzeichnet durch folgende Merkmale:
a) Es ist ein Strommesswandler (3) zur Messung des vom Sternpunkt des Drehstrom-Filterkreises nach Erde (M) abfliessenden Nullstroms vorgesehen,
b) es sind Spannungsmesswandler (2R, 2S, 2T) zur Messung der netzseitigen Phasenspannungen des Filterkreises vorgesehen,
c) es ist ein Siebglied (7a, 7b) zur Gewinnung der Grundschwingung des kompensierten Nullstroms vorgesehen,
d) es sind phasenbezogene Nullstromauswertungen (8R, 8S, 8T) vorgesehen, die jeweils von der Grundschwingung des kompensierten Nullstroms vom Siebglied (7a, 7b) und von einer netzseitigen Phasenspannung von einem der Spannungsmesswandler (2R bzw. 2S bzw. 2T) beaufschlagt sind, wobei die phasenbezogenen Nullstromauswertungen (8R, 8S, 8T) den auf die zugehörige Phasenspannung bezogenen Imaginärteil der Grundschwingung des kompensierten Nullstroms als Fehlersignal bilden und über einen Differenzierer (36, 37) transient auswerten,
e) es sind Kompensationsglieder (10R, 10S, 10T) vorgesehen, die jeweils eingangsseitig mit den Ausgangssignalen aller phasenbezogenen Nullstromauswertungen (10R, 10S, 10T) beaufschlagt sind und die Ausgangssignale der Nullstromauswertungen der nicht von einem defekten Teilkondensator betroffenen Phasen eliminieren,
f) es ist ein Melde- und Auslösekreis (9) mit Phasenanzeigen (9R, 9S, 9T) vorgesehen, die an die Kompensationsglieder (10R, 10S, 10T) angeschlossen sind und Zählstufen (51 bis 55, 56 bis 61, 62 bis 67) zur Ermittlung der Anzahl der in einer Phase ausgefallenen Teilkondensatoren einer Kondensatorbatterie enthalten.

3. Überwachungseinrichtung nach Anspruch 1, dadurch gekennzeichnet, dass eine Kompensationsschaltung vorgesehen ist, die zur Bildung eines kompensierten Nullstroms vorgesehen, die elektronische Filternachbildungen (4R, 4S, 4T) enthält, die eingangsseitig an die Spannungsmesswandler (2R, 2S, 2T) angeschlossen sind und nachgebildete Phasenstromwerte erzeugen, und die ferner einen Addierverstärker (5) zur Erzeugung eines nachgebildeten Nullstroms aus den Ausgangssignalen der elektronischen Filternachbildungen (4R, 4S, 4T) sowie einen Differenzverstärker (6) zur Bildung der Abweichungen zwischen dem vom Addierverstärker (5) nachgebildeten Nullstrom und dem vom Strommesswandler (3) gemessenen Nullstrom enthält.

4. Überwachungseinrichtung nach Anspruch 3, gekennzeichnet durch eine elektronische Filternachbildung (z.B. 4R) mit folgenden Merkmalen:
g) ein Addierverstärker (12) zur Ermittlung eines nachgebildeten Spannungsabfalls ($u_L{}^*$) der Drosselspule, dem die gemessene Phasenspannung ($u_R$ bzw. $u_R'$), ein nachgebildeter Kondensatorspannungsabfall ($u_c{}^*$) und ein nachgebildeter Spannungsabfall ($u_r{}^*$) am Gleichstromwiderstand der Drosselspule zugeführt sind,
h) ein Integrator (14) zur Ermittlung eines nachgebildeten Drosselstroms ($i_L{}^*$), dem die Ausgangsspannung des Addierverstärkers (12) zugeführt ist,
i) ein Verstärker (13) zur Ermittlung des nachgebildeten Spannungsabfalls ($u_R{}^*$) am Gleichstromwiderstand der Drosselspule, dem die Ausgangsspannung des Integrators (14) zugeführt ist,
j) ein Verstärker (15) zur Ermittlung des nachgebildeten Stromes ($i_H{}^*$) durch den Hochpasswiderstand, dem die Ausgangsspannungen des Addierverstärkers (12) und des Verstärkers (13) zugeführt werden,
k) ein weiterer Addierverstärker (16) zur Ermittlung des nachgebildeten Phasenstromes ($i_R{}^*$), dem die Ausgangsspannungen des Integrators (14) und des Verstärkers (15) zugeführt werden,
l) ein Integrator (17) zur Ermittlung des nachgebildeten Kondensatorspannungsabfalls ($u_c{}^*$), dem die Differenz der Ausgangsspannung des weiteren Addierverstärkers (16) und eines weiteren Verstärkers (11) zugeführt ist,
m) ein weiterer Verstärker (11) zur Ermittlung des nachgebildeten Stroms ($i_G{}^*$) durch den Gleichstromleitwert der Kondensatorbatterie, dem die Ausgangsspannung des Integrators (17) zugeführt ist (Fig. 3).

5. Überwachungseinrichtung nach Anspruch 2, gekennzeichnet durch eine phasenbezogene Nullstromauswertung (8R, Fig. 4) mit folgenden Merkmalen:
n) ein mit der Grundschwingung des kompensierten Nullstroms beaufschlagter Vektoridentifizierer (20), der zur einen Winkelkomponente die hierzu um 90°el phasenverschobene Winkelkomponente des Nullstroms ermittelt,
o) ein weiterer, mit dem Messwert einer netzseitigen Phasenspannung beaufschlagter Vektor-

identifizierer (35) der zur einen Winkelkomponente die hierzu um 90°el phasenverschobene
Winkelkomponente der Phasenspannung ermittelt,

p) ein nichtlinearer Regelkreis zur Normierung
der Winkelkomponenten der gemessenen Phasenspannung,

q) zwei Multiplizierer (21, 22), deren Eingängen
die gleichnamigen Winkelkomponenten des
kompensierten Nullstroms und der zugehörigen normierten Phasenspannung zúgeführt
werden,

r) ein mit den Ausgängen der Multiplizierer (20,
21) beaufschlagter Addierverstärker (23) zur
Bildung des auf eine Phase bezogenen Imaginärteils des kompensierten Nullstroms,

s) ein Tiefpassfilter (24, 25, 26) zur Unterdrükkung von Oberschwingung im ermittelten Wert
des auf eine Phase bezogenen Imaginärteils
des kompensierten Nullstroms,

t) ein Differenzierer (36, 37) zur transienten Auswertung des auf eine Phase bezogenen Imaginärteils des kompensierten Nullstroms,

u) ein Betragsbildner (38) zur Gleichrichtung des
Ausgangssignals des Differenzierers (36, 37).

6. Überwachungseinrichtung nach Anspruch 2,
dadurch gekennzeichnet, dass jedes Kompensationsglied (10R, Fig. 4) einen Addierverstärker
enthält, der eingangsseitig über Eingangswiderstände mit den Ausgängen aller phasenbezogenen Nullstromauswertungen verbunden ist, wobei
durch entsprechende Wahl der Eingangswiderstände das Ausgangssignal der zugehörigen Nullstromauswertung (8R) mit dem Faktor 3/2 und die
Signale der beiden anderen Nullstromauswertungen (8S, 8T) mit dem Faktor − 1/2 gewichtet werden.

7. Überwachungseinrichtung nach Anspruch 2,
dadurch gekennzeichnet, dass die Zählstufen der
Phasenanzeigen (9R, Fig. 6) jeweils einen eingangsseitigen Grenzwertmelder (z.B. 51) zur
Steuerung einer Anzeige (55) und ein nachgeschaltetes Zeitglied (52, 53) zur Steuerung einer
Umschalteinrichtung (50) auf die nächste Zählstufe enthalten.

**Claims**

1. A monitoring device for the capacitor banks
($C_R$, $C_S$, $C_T$) of a three-phase filter circuit with
strings of filters connected in star formation and
earthed at the star point, and whose capacitor
banks each consists of a number of parallel
strings comprising a number of series-connected
sub-capacitors ($C_i$) connected together by trans-
verse lines, in which any changes in the fundamental oscillation level of the zero current discharged to earth (M) from the star point of the
three-phase filter circuit are detected and
analysed in order to determine defective sub-
capacitors (Ci) in a capacitor bank, characterised
in that in addition changes in the phase position
of the fundamental oscillation of the zero current
are also detected, and only sudden changes in level and phase position of the fundamental oscillation of the zero current are analysed (transient analysis).

2. A monitoring device as claimed in Claim 1,
characterised by the following features:

a) a current measuring transformer (3) is
provided for measuring the zero current discharged to earth (M) from the star points of the
three-phase filter circuit;

b) voltage measuring transformers (2R, 2S, 2T)
are provided for measuring the network-side
phase voltages of the filter circuit;

c) a filter element (7a, 7b) is pvorided to obtain
the fundamental oscillation of the compensated zero current;

d) phase-related zero current analysis units (8R,
8S, 8T) are provided, to each of which is fed the
fundamental oscillation of the compensated
zero current from the filter element (7a, 7b) and
a network-side phase voltage from one of the
voltage measuring transformers (2R, 2S or 2T
as the case may be), where the phase-related
zero current analysis units (8R, 8S, 8T) from
the imaginary component of the fundamental
oscillation of the compensated zero current
related to the associated phase voltage to
analyse as an error signal in transient fashion
via a differentiator (36, 37);

e) compensation elements (10R, 10S, 10T) are
provided, each having its input supplied with
the output signals of all the phase-related zero
current analysis units (10R, 10S, 10T) and eliminating the output signals of the zero current
analysis units of the phases not affected by a
defective sub-capacitor; and

f) an indicating and triggering circuit (9) is
provided having phase displays (9R, 9S, 9T)
connected to the compensation elements (10R,
10S, 10T) and containing counter stages (51 to
55, 56 to 61, 62 to 67) which serve to determine
the number of sub-capacitors of a capacitor
bank which have failed in a phase.

3. A monitoring device as claimed in Claim 1,
characterised in that a compensation circuit is
provided to form a compensated zero current and
contains electronic simulated filters (4R, 4S, 4T)
which have their inputs connected to the voltage
measuring transformers (2R, 2S, 2T) and produce
simulated phase current values, and which also
contains an adder amplifier (5) to produce a simulated zero current from the output signals of the
electronic simulated filters (4R, 4S, 4T) and a differential amplifier (6) to form the deviations between the zero current simulated by the adder
amplifier (5) and the zero current measured by the
current measuring transformer (3).

4. A monitoring device as claimed in Claim 3,
characterised by an electronic simulated filter
(e.g. 4R) having the following features:

g) an adder amplifier (12) supplied with the measured phase voltage ($u_R$ and $u_R'$), a simulated
capacitor voltage drop ($u_c^*$) and a simulated
voltage drop ($u_r^*$) across the d.c. resistor of the
choke coil to detect a simulated voltage drop
($u_L^*$) of the choke coil;

h) an integrator (14) supplied with the output voltage of the adder amplifier (12) to detect a simulated choke current ($i_L^*$);

i) an amplifier (13) supplied with the output voltage of the integrator (14) to determine the simulated voltage drop across the d.c. resistor of the choke coil;

j) an amplifier (15) supplied with the output voltages of the adder amplifier (12) and the amplifier (13) to determine the simulated current ($i_H^*$) through the high-path resistor;

k) a further adder amplifier (16) supplied with the output voltages of the integrator (14) and the amplifier (15) to determine the simulated phase current ($i_R^*$);

l) an integrator (17) supplied with the difference between the output voltage of the further adder amplifier (16) and a further amplifier (11) to determine the simulated capacitor voltage drop ($u_c^*$); and

m) a further amplifier (11) supplied with the output voltage of the integrator (17) to determine the simulated current ($i_G^*$) through the d.c. conductance of the capacitor bank (Fig. 3).

5. A monitoring device as claimed in Claim 2, characterised by a phase-related zero current analysis unit (8R, Fig. 4) having the following features:

n) a vector identifier (20) to which is supplied the fundamental oscillation of the compensated zero current and determines the angle component of the zero current electrically displaced in phase by 90° in order to determine one angle component;

o) a further vector identifier (35) to which is supplied the measured value of a network-side phase voltage, and determines the angle component of the phase voltage electrically displaced in phase by 90° in order to determine one angle component;

p) a non-linear regulating circuit to standardise the angle components of the measured phase voltage;

q) two multipliers (21, 22) whose inputs are supplied with the correspondent angle components of the compensated zero current and the associated standardised phase voltage;

r) an adder amplifier (23) linked to the outputs of the multipliers (20, 21) to form the imaginary component relative to a phase of the compensated zero current;

s) a low-pass filter (24, 25, 26) to suppress harmonics in the detected value of the imaginary component relative to a phase of the compensated zero current;

t) a differentiator (36, 37) for the transient analysis of the imaginary component relative to a phase of the compensated zero current; and

u) an amount forming unit (38) which serves to rectify the output signal of the differentiator (36, 37).

6. A monitoring device as claimed in Claim 2, characterised in that each compensation element (10R, Fig. 4) contains an adder amplifier whose input is connected via input resistors to the outputs of all the phase-related zero current analysis units, and by appropriate selection of the input resistors the output signal of the associated zero current analysis unit (8R) is weighted by the factor 3/2, whilst the signals of the two other zero current analysis units (8S, 8T) are weighted by the factor 1/2.

7. A monitoring device as claimed in Claim 2, characterised in that the counter stages of the phase displays (9R, Fig. 6) each contain an input-end limit value indicator (e.g. 51) for the control of a display (55), and a following timer (52, 53) for the control of a switch-over device (50) to the next counter stage.

**Revendications**

1. Dispositif de contrôle pour les batteries de condensateurs ($C_R$, $C_S$, $C_T$) d'un circuit de filtre triphasé comportant des branches de filtres reliées en étoile et mises à la terre au niveau du point neutre et dont les batteries de condensateurs sont constituées par un certain nombre de branches parallèles comportant un certain nombre de condensateurs partiels ($C_i$) branchés en série et reliés entre eux par l'intermédiaire de lignes transversales continues, et dans lequel on détermine des modifications de la valeur de l'oscillation fondamentale du courant de neutre partant du point neutre du circuit de filtre triphasé en direction de la terre (M) et on évalue ces modifications de valeur pour la détermination de condensateurs partiels ($C_i$) défectueux dans une batterie de condensateurs, caractérisé par le fait qu'on détermine également, en supplément, des modifications de la position de phase de l'oscillation fondamentale du courant de neutre et que l'on évalue les modifications déterminées de la valeur et de la position de phase de l'oscillation fondamentale du courant de neutre uniquement lorsque ces variations apparaissent de façon brusque (évaluation transitoire).

2. Dispositif de contrôle suivant la revendication 1, caractérisé par les moyens particuliers suivants:

a) il est prévu un transformateur de mesure d'intensité (3) servant à mesurer le courant de neutre partant du point neutre du circuit de filtre triphasé en direction de la terre (M),

b) il est prévu des transformateurs de mesure de tension (2R, 2S, 2T) servant à mesurer les tensions de phase, côté réseau, du circuit de filtre,

c) il est prévu un circuit de filtrage (7a, 7b) servant à obtenir l'oscillation fondamentale du courant de neutre compensé,

d) il est prévu des dispositifs (8R, 8S, 8T) d'évaluation du courant de neutre, liés aux différentes phases et qui sont chargés respectivement par l'oscillation fondamentale du courant de neutre compensé délivré par le circuit de filtrage (7a, 7b) et par une tension de phase, côté réseau, de l'un des transformateurs de mesure de tension (2R ou 2S ou 2T), les dispositifs (8R, 8S, 8T) d'évaluation du courant de neutre associés aux différentes phases formant la partie imaginaire, rapportée à la tension de phase associée, de l'oscillation fondamentale du courant de neutre compensé, en tant que signal d'erreur et évaluant cette partie imaginaire de façon transitoire par l'intermédiaire d'un circuit différentiateur (36, 37),

e) il est prévu des circuits de compensation (10R, 10S, 10T) qui sont chargés respectivement, du côté entrée, par les signaux de sortie de tous les dispositifs (8R, 8S, 8T) d'évaluation du courant de neutre, associés aux différentes phases, et éliminent les signaux de sortie des dispositifs d'évaluation du courant de neutre des phases non concernées par un condensateur partiel défectueux, et

f) il est prévu un circuit (9) de signalisation et de déclenchement comportant des dispositifs d'affichage de phase (9R, 9S, 9T) qui sont raccordés aux circuits de compensation (10R, 10S, 10T) et qui contiennent des étages de comptage (51 à 55, 56 à 61, 62 à 67) servant à déterminer le nombre des condensateurs partiels, qui sont défaillants dans une phase, d'une batterie de condensateurs.

3. Dispositif de contrôle suivant la revendication 1, caractérisé par le fait qu'il est prévu un circuit de compensation qui sert à la formation d'un courant de neutre compensé et contient des circuits électroniques de simulation de filtres (4R, 4S, 4T) qui sont raccordés du côté entrée aux transformateurs de mesure de tension (2R, 2S, 2T) et produisent des valeurs simulées des courants de phase, et qui contient en outre un amplificateur additionneur (5) servant à produire un courant de neutre simulé à partir des signaux de sortie des circuits électroniques de simulation de filtres (4R, 4S, 4T) ainsi qu'un amplificateur différentiel (6) servant à former des écarts entre le courant de neutre, simulé par l'amplificateur additionneur (5), et le courant de neutre mesuré par le transformateur de mesure d'intensité (3).

4. Dispositif de contrôle suivant la revendication 3, caractérisé par un circuit électronique de simulation de filtre (par exemple 4R) possédant les moyens particuliers suivants:

g) un amplificateur additionneur (12) servant à déterminer une chute de tension simulée ($i_L{}^*$) aux bornes de la bobine d'arrêt et auxquelles sont envoyées la tension de phase mesurée ($u_R$ ou $u_R{}'$), une chute de tension simulée ($u_c{}^*$) aux bornes des condensateurs et une chute de tension simulée ($u_R{}^*$) dans la résistance à courant continu de la bobine d'arrêt,

h) un intégrateur (14) servant à déterminer un courant simulé ($i_L{}^*$) traversant la bobine et auquel est envoyée la tension de sortie de l'amplificateur additionneur (12),

i) un amplificateur (13) servant à déterminer la chute de tension simulée ($u_R{}^*$) dans la résistance à courant continu de la bobine d'arrêt et auquel est envoyée la tension de sortie de l'intégrateur (14),

j) un amplificateur (15) servant à déterminer le courant simulé ($i_H{}^*$) traversant la résistance de filtre: passe-haut et auquel sont envoyées les tensions de sortie de l'amplificateur additionneur (12) et de l'amplificateur (13),

k) un autre amplificateur additionneur (16) servant à déterminer le courant de phase simulé ($i_R{}^*$) et auquel sont envoyées les tensions de sortie de l'intégrateur (14) et de l'amplificateur (15),

l) un intégrateur (17) servant à déterminer la chute de tension simulée ($u_c{}^*$) aux bornes des condensateurs et auquel est envoyée la différence des tensions de sortie de l'autre amplificateur additionneur (16) et de l'autre amplificateur (11),

m) un autre amplificateur (11) servant à déterminer le courant simulé ($i_G{}^*$) traversant l'élément de conductance de la batterie de condensateurs et auquel est envoyée la tension de sortie de l'intégrateur (17) (figure 3).

5. Dispositif de contrôle suivant la revendication 2, caractérisé par un dispositif (8R, figure 4) d'évaluation du courant de neutre, associé à la phase et possédant les caractéristiques suivantes:

n) un identificateur vectoriel (20), chargé par l'oscillation fondamentale du courant de neutre compensé et qui détermine, par rapport à une composante angulaire, la composante angulaire du courant de neutre, dont la phase est décalée de 90 degrés électriques par rapport à la précédente,

o) un autre identificateur vectoriel (35) chargé par la valeur de mesure d'une tension de phase côté réseau et qui détermine par rapport à une composante angulaire, la composante angulaire de la tension de phase, qui est déphasée de 90 degrés électriques par rapport à ladite composante,

p) un circuit de réglage non linéaire servant à normaliser la composante angulaire de la tension de phase mesurée,

q) deux multiplicateurs (21, 22) aux entrées desquels sont envoyées les composantes angulaires de même nom du courant de neutre compensé et de la tension de phase normalisée associée,

r) un amplificateur additionneur (23) chargé par les sorties des multiplicateurs (20, 21) et servant à former la partie imaginaire, rapportée à une phase, du courant de neutre compensé,

s) un filtre passe-bas (24, 25, 26) servant à supprimer un harmonique dans la valeur déterminée de la partie imaginaire, rapportée à une phase, du courant de neutre compensé,

t) un circuit différentiateur (36, 37) servant à évaluer de façon transitoire la partie imaginaire, rapportée à une phase, du courant de neutre compensé,

u) un dispositif (38) de formation de valeurs, servant à redresser le signal de sortie du circuit différentiateur (36, 37).

6. Dispositif de contrôle suivant la revendication 2, caractérisé par le fait que chaque organe de compensation (10R, figure 4) contient un amplificateur additionneur qui est relié, du côté entrée, par l'intermédiaire de résistances d'entrée aux sorties de tous les dispositifs d'évaluation du courant de neutre, associés aux phases, le signal de sortie du dispositif associé (8R) d'évaluation du courant de neutre étant pondéré par le facteur 3/2 et les signaux de deux autres dispositifs (8S, 8T) d'évaluation du courant de neutre étant pondérés par le facteur − 1/2, grâce à un choix correspondant des résistances d'entrée.

7. Dispositif de contrôle suivant la revendication 2, caractérisé par le fait que les étages de comptage des dispositifs d'affichage de phase (9R, figure 6) contiennent respectivement un transmetteur de valeur limite (par exemple 51) situé du côté entrée et servant à commander un dispositif d'affichage (55) et une minuterie (52, 53) branchée en aval et servant à commander un dispositif de commutation (50) en le plaçant sur l'étage de comptage suivant.

FIG 1

0 040 766

0 040 766

FIG 2

FIG 3

FIG 4

15

$$\boxed{\dfrac{\cos \gamma}{\sin \gamma}} \quad 40$$

$\cos \omega t$ — $\boxed{T1}$ — $\boxed{\sqrt{1+ \omega^2 T_1^{\,2}}}$ — $\boxed{\dfrac{1}{\sin \gamma}}$ — $\ominus$ — $\sin \omega t$

81    82    39    83

## FIG 5A

$$\boxed{\dfrac{1}{\tan \gamma}} \quad 44$$

$\cos \omega t$ — $\boxed{\phantom{x}}$ — $\boxed{\dfrac{1}{\sin \gamma \, \cos \gamma}}$ — $\ominus$ — $\sin \omega t$

41    43    42

## FIG 5B

$$\boxed{1} \quad 48 \qquad \underline{20 \; [35]}$$

$\cos \omega t$ — $\boxed{\phantom{x}}$ — $\boxed{2}$ — $\ominus$ — $\sin \omega t$

45    47    46

## FIG 5C

## FIG 5

FIG 6

FIG 7